# EUROPÄISCHE PATENTSCHRIFT

(11) **EP 1 369 323 B1**
(45) Veröffentlichungstag und Bekanntmachung des Hinweises auf die Patenterteilung: **24.01.2007**
(21) Anmeldenummer: 03011466.4
(22) Anmeldetag: 20.05.2003
(51) Int. Cl.: B60R 25/00, G07C 9/00

(54) **Sicherungssystem**
Security system
Système de sécurité

(30) Priorität: 28.05.2002 DE 10223718
(43) Veröffentlichungstag der Anmeldung: 10.12.2003
(73) Patentinhaber: Delphi Technologies, Inc., Troy, MI 48007 (US)
(72) Erfinder: Uttich, Bernd, 51643 Gummersbach (DE)
(74) Vertreter: Manitz, Finsterwald & Partner GbR

(56) Entgegenhaltungen:
- EP-A- 0 768 764
- EP-A- 1 055 931
- DE-A- 19 820 207
- DE-A- 19 823 122
- US-A- 5 796 180

## Beschreibung

Die Erfindung betrifft ein Sicherungssystem für einen schlüssellosen Zugang, insbesondere für Kraftfahrzeuge, mit einem insbesondere einem Kraftfahrzeug zugeordneten Steuergerät, einer Spannungsversorgung sowie wenigstens einer mit dem Steuergerät verbundenen Antenne zur Kommunikation mit einer Bedienungseinrichtung über eine insbesondere bidirektionale Funkstrecke. Sie betrifft ferner ein Verfahren zur Überwachung des Anschlusszustandes einer Antenne eines solchen Sicherungssystems.

Es sind bereits Chipkartensysteme für einen schlüssellosen Zugang (keyless entry) bekannt, bei denen mittels der den Schlüssel ersetzenden Chipkarte beispielsweise die Türen und der Kofferraum des betreffenden Kraftfahrzeugs geöffnet und dessen Motor gestartet werden können. Dabei werden zwischen einem im Kraftfahrzeug integrierten, einen Sender sowie einen Empfänger umfassenden Steuergerät und der Chipkarte Sende- und Antwortsignale gewechselt. Bevor eine jeweilige Funktion ausgeführt werden kann, wird der von der Chipkarte übermittelte Identifikationscode geprüft.

Bisher wurde für eine jeweilige Diagnose der Antenne die reflektierte Welle bei der Betriebsfrequenz der Antenne gemessen bzw. das sogenannte Stehwellenverhältnis CWR (standing wave ratio) bestimmt. Eine entsprechende Messung kann beispielsweise über einen Richtkoppler oder dergleichen erfolgen. Eine solche Vorgehensweise ist nun aber insbesondere für den Kraftfahrzeugbereich zu komplex und aufwendig.

In der EP-A-1 055 931 wird eine Schaltungsanordnung zum Prüfen der Funktionsbereitschaft einer Antenne für ein Funktelefon eines Fahrzeugs beschrieben. Ein Sende/Empfangsteil RF des Funktelefons ist über einen Antennenanschluss mit der Antenne verbunden. An den betreffenden Signalkontakt des Antennenanschlusses sind überdies eine Spannungsquelle und ein Eingang eines Spannungsauswerters angeschlossen. Die als Stabstrahler ausgeführte Antenne ist direkt mit einem Nebenpfad verbunden, der eine Impedanz bestehend aus einem Widerstand aufweist und den Stromkreis für den über einen Quellenwiderstand zugeführten Prüfstrom vom Stabstrahler zum Massekontakt schließt. Die Impedanz bildet mit dem Quellenwiderstand einen Spannungsteiler, wobei der Wert des die Impedanz bildenden Widerstandes vorzugsweise gleich dem Wert des Quellenwiderstandes ist. Der Prüfstrom erzeugt an der Impedanz eine Prüfspannung, die bei fehlender oder nicht angeschlossener Antenne gleich der Quellenspannung ist. Der Spannungsauswerter vergleicht die Prüfspannung mit einer Referenzspannung und liefert einer Steuerschaltung des Funktelefons ein entsprechendes Indikationssignal.

Aus der DE-A-198 23 122 ist eine multifunktionale Telefonanlage für Kraftfahrzeuge mit integriertem Sicherungssystem für einen schlüssellosen Zugang gemäß dem Oberbegriff des Anspruchs 1 bekannt.

Ziel der Erfindung ist es, ein verbessertes Sicherungssystem sowie ein verbessertes Verfahren der eingangs genannten Art zu schaffen, die auf möglichst einfache und zuverlässige Weise eine Selbstdiagnose oder -überwachung des Anschlusszustandes der Antenne gestatten.

Diese Aufgabe wird hinsichtlich des Sicherungssystems erfindungsgemäß dadurch gelöst, dass die Antenne mit einer Gleichspannung und/oder einem Gleichstrom beaufschlagbar ist und das Steuergerät Mittel für eine Gleichspannungs- und/oder Gleichstrommessung sowie Mittel zur Auswertung des Messergebnisses umfasst, um anhand dieses Messergebnisses auf den jeweiligen Anschlusszustand der Antenne zu schließen, wobei während des normalen Betriebs ein zweites Ende der Antenne mit Masse bzw. mit einer Klemme der Spannungsversorgung verbunden und das erste Antennenende wahlweise über einen Pull-up- bzw. Pull-down-Widerstand mit der anderen Klemme der Spannungsversorgung oder mit der Masse entsprechenden einen Klemme der Spannungsversorgung verbindbar ist.

Über die Gleichspannungs- bzw. Gleichstrommessung ist auf relativ einfache Weise eine zuverlässige Selbstdiagnose der HF-Antenne möglich, mit der z.B. festgestellt werden kann, ob die Antenne mit dem Steuergerät und dem Kraftfahrzeug verbunden oder gegenüber z.B. der positiven Klemme der betreffenden Versorgung, z.B. der Kraftfahrzeugbatterie, kurzgeschlossen ist. Bisher war im Kraftfahrzeugbereich eine Diagnose der HF-Antenne angesichts der hohen Kosten sowie des entsprechenden Aufwandes nicht möglich.

Das zweite Antennenende kann insbesondere an das mit der betreffenden Klemme der Spannungsversorgung verbundene Chassis eines Kraftfahrzeuges angeschlossen sein.

Der Anschluss, über den die Antenne an das Steuergerät angeschlossen ist, weist vorzugsweise eine gegenüber dem Antenneneingang hohe Impedanz auf. Zur Erzielung der geringen Impedanz des Antenneneingangs kann ggf. ein Anpassungsschaltkreis vorgesehen sein.

Vorzugsweise sollte auch die Impedanz dieses Pull-up-Widerstandes gegenüber dem Antenneneingang hoch sein.

Dabei kann mittels des Steuergeräts insbesondere der Gleichspannungspegel an dem Antenneneingang überwacht werden.

Vorteilhafterweise ist der Antenneneingang zur Überwachung seines Zustandes mit einem gesonderten Anschluss des Steuergeräts verbunden.

Zur Überwachung des Anschlusszustandes der Antenne kann diese beispielsweise mit einem kontinuierlichen Gleichstromsignal oder auch mit einem geschalteten Gleichstromsignal beaufschlagt sein.

Das Steuergerät kann insbesondere wenigstens einen Mikrocontroller umfassen. Es kann sich insbesondere um das Steuergerät eines Kraftfahrzeuges handeln. Dabei kann es beispielsweise durch den Bordcomputer gebildet sein.

An dem Überwachungseingang des Steuergeräts liegen je nachdem, ob die Antenne korrekt angeschlossen ist oder nicht, unterschiedliche Pegel an. So kann beispielsweise dann ein hoher Pegel vorliegen, wenn die Antenne nicht angeschlossen ist, und bei korrekt angeschlossener Antenne ein niedriger Pegel vorliegen. Bei einem umgekehrt gewählten Anschluss der Antenne ergeben sich umgekehrte Pegel.

Bei der Spannungsversorgung kann es sich insbesondere um die Batterie des betreffenden Kraftfahrzeugs handeln.

Die eingangs angegebene Aufgabe wird überdies gelöst durch ein Verfahren zur Überwachung des Anschlusszustandes einer Antenne eines insbesondere für Kraftfahrzeuge bestimmten Sicherungssystems für einen schlüssellosen Zugang, wobei das Sicherungssystem überdies mit einer Spannungsversorgung versehen ist und ein insbesondere einem Kraftfahrzeug zugeordnetes Steuergerät umfasst, mit dem ein erstes Ende der Antenne verbunden ist, und wobei die Antenne der Kommunikation mit einer tragbaren Bedienungseinrichtung über eine insbesondere bidirektionale Funkstrecke dient, das dadurch gekennzeichnet ist, dass die Antenne mit einer Gleichspannung und/oder einem Gleichstrom beaufschlagt und mittels des Steuergeräts eine Gleichspannungs- und/oder Gleichstrommessung durchgeführt wird, um anhand des Messergebnisses auf den jeweiligen Anschlusszustand der Antenne zu schließen, wobei für den normalen Betrieb ein zweites Ende der Antenne mit Masse bzw. mit einer Klemme der Spannungsversorgung verbunden wird und wobei das erste Antennenende zur Überprüfung eines korrekten Anschlusses der Antenne über einen Pull-up-Widerstand mit der anderen Klemme der Spannungsversorgung und zur Erkennung eines Kurzschlusses über einen Pull-down-Widerstand mit der Masse entsprechenden einen Klemme der Spannungsversorgung verbunden wird.

Bevorzugte Ausgestaltungen des erfindungsgemäßen Verfahrens sind in den Unteransprüchen angegeben.

Die Erfindung wird im folgenden anhand eines Ausführungsbeispiels unter Bezugnahme auf die Zeichnung näher beschrieben, wobei mit diesem Ausführungsbeispiel lediglich das Prinzip der erfindungsgemäßen Antennendiagnose verdeutlicht werden soll.

Die einzige Figur der Zeichnung zeigt in rein schematischer Darstellung einen ein Steuergerät 10 sowie eine Antenne 12 umfassenden Teil eines Sicherungssystems 14 für einen schlüssellosen Zugang. Dabei kann es sich insbesondere um ein Sicherungssystem 14 für Kraftfahrzeuge handeln. Dieses Sicherungssystem 14 kann grundsätzlich auch mehrere Antennen 12 umfassen.

Das Sicherungssystem 14 kann also insbesondere ein einem Kraftfahrzeug zugeordnetes Steuergerät 10, eine Spannungsversorgung V_{BATT}, von der im vorliegenden Fall z.B. das Potential Vcc abgeleitet ist, sowie wenigstens eine mit dem Steuergerät 10 verbundene Antenne 12 zur Kommunikation mit einer tragbaren Bedienungseinrichtung über eine insbesondere bidirektionale Funkstrecke umfassen. Dabei kann beispielsweise eine tragbare Bedienungseinrichtung vorgesehen sein. Es ist jedoch auch eine Kommunikation zwischen fest installierten Komponenten denkbar.

Bei dem Sicherungssystem 14 für einen schlüssellosen Zugang kann es sich überdies insbesondere um ein Fernbedienungssystem (RKE = Remote Keyless Entry) handeln. Es kann ein aktives System sein, bei dem der Benutzer z.B. auf einen die Bedienungseinrichtung bildenden Schlüssel drücken muss, oder auch ein passives System sein, bei dem die betreffende Prozedur beispielsweise mit einer Betätigung eines Türgriffes des Fahrzeugs eingeleitet wird, woraufhin das Fahrzeug automatisch ein die Prozedur einleitendes Signal zum Schlüssel aussendet.

Die Antenne 12 ist mit einer Gleichspannung und/oder einem Gleichstrom beaufschlagbar. Zudem umfasst das Steuergerät 10 Mittel für eine Gleichspannungs- und/oder Gleichstrommessung sowie Mittel zur Auswertung des Messergebnisses, um anhand dieses Messergebnisses auf den jeweiligen Anschlusszustand der Antenne 12 zu schließen.

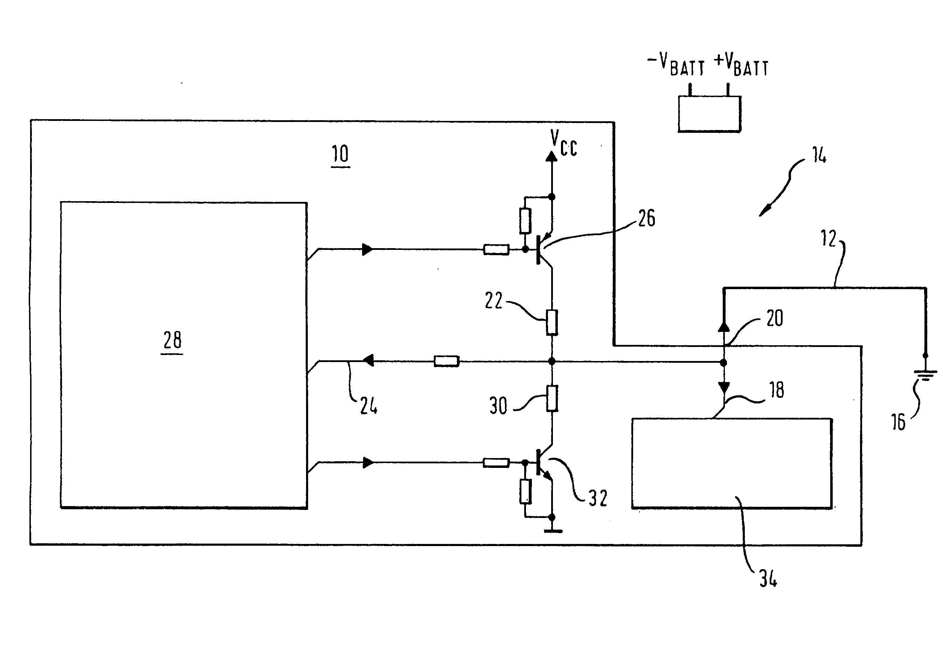

Wie anhand der Figur 1 zu erkennen ist, liegt beim vorliegenden Ausführungsbeispiel während des normalen Betriebs ein Ende der Antenne 12 auf Masse 16. Anders ausgedrückt kann das betreffende Antennenende mit der betreffenden Klemme (-V_{Batt}) der Spannungsversorgung V_{Batt}, hier beispielsweise der negativen Klemme, verbunden sein. In der Praxis kann das betreffende Ende der Antenne 12 insbesondere an das mit der betreffenden Klemme der Spannungsversorgung V_{Batt} verbundene Chassis des Kraftfahrzeuges angeschlossen sein.

Die Antenne 12 wird beispielsweise über einen Anschluss 18 an das Steuergeräts 10 angeschlossen. Wie anhand der einzigen Figur zu erkennen ist, ist über diesem Anschluss 18 insbesondere auch die Verbindung zu einem HF-Empfänger 34 herstellbar.

Der an das Steuergerät 10 angeschlossene Eingang 20 der Antenne 12 kann z.B. über einen Pull-up-Widerstand 22 mit der anderen Klemme (+V_{Batt}) der Spannungsversorgung V_{Batt}, d.. hier z.B. mit V_{cc} verbunden werden, um zu überprüfen, ob das betreffende Ende der Antenne 12 an Masse 16 angeschlossen ist. Im vorliegenden Fall kann diese Verbindung z.B. über eine Transistorschaltung 26 hergestellt werden, die über einen Mikrocontroller 28 des Steuergeräts 10 entsprechend ansteuerbar ist.

Mittels des Steuergeräts 10 kann nun beispielsweise der Gleichspannungspegel an dem Antenneneingang 20 überwacht werden. Dabei kann der Antenneneingang 20 zur Überwachung seines Zustandes mit einem gesonderten Anschluss 24 des Steuergeräts 10 bzw. Mikrocontrollers 28 verbunden sein.

Der Anschluss 20, an dem die Antenne 12 zur Überwachung des Anschlusszustandes an das Steuergerät 10 angeschlossen ist, besitzt vorzugsweise eine geringe Impedanz. Zur Erzielung der geringen Impedanz kann ggf. ein Anpassungsschaltkreis vorgesehen sein.

Die niedrige Impedanz des Antenneneingangs ist notwendig, um eine Beeinflussung durch den Pull-up-Widerstand 22 und den Eingang des Steuergeräts zu minimieren.

Ist die Antenne 12 nicht korrekt angeschlossen, d.h. hier z.B. nicht mit dem Chassis des Fahrzeugs und entsprechend nicht mit Masse 16 verbunden, so kann dies über das Steuergerät 10 dadurch festgestellt werden, dass am Anschluss 24 ein hohes Potential anliegt, nachdem an dem Pull-up-Widerstand 22 kein Spannungsabfall auftritt und am Antenneneingang 20 somit das Potential "+V_{Batt}" bzw. hier Vcc vorliegt.

Ist die Antenne 12 dagegen korrekt angeschlossen, so ergibt sich an dem Antenneneingang 20 ein geringer Pegel, was wieder über den Anschluss 24 des Mikrocontrollers 28 erfasst wird.

Der Antenneneingang 20 kann beispielsweise auch über einen Pull-down-Widerstand 30 mit Masse verbunden werden, um zu überprüfen, ob die Antenne 12 möglicherweise kurzgeschlossen bzw. z.B. mit der Batterieklemme +V_{Batt} verbunden ist. Im vorliegenden Fall kann diese Verbindung z.B. über eine Transistorschaltung 32 hergestellt werden, die wieder über den Mikrocontroller 28 des Steuergeräts 10 entsprechend ansteuerbar ist.

Während die Antenne 12 beim vorliegenden Ausführungsbeispiel z.B. über den Pull-up-Widerstand 26 beispielsweise mit einem kontinuierlichen Gleichstromsignal beaufschlagt wird, sind grundsätzlich auch solche Ausführungen denkbar, bei denen zur Überwachung des Anschlusszustandes der Antenne 12 diese mit einem geschalteten Gleichstromsignal beaufschlagt wird.

### Bezugszeichenliste

- 10: Steuergerät
- 12: Antenne
- 14: Sicherungssystem
- 16: Masse
- 18: Anschluss
- 20: Antenneneingang
- 22: Pull-up-Widerstand
- 24: Anschluss
- 26: Transistorschaltung
- 28: Mikrocontroller
- 30: Pull-down-Widerstand
- 32: Transistorschaltung
- 34: HF-Empfänger

## Patentansprüche

1. Sicherungssystem (14) für einen schlüssellosen Zugang, insbesondere für Kraftfahrzeuge, mit einem insbesondere einem Kraftfahrzeug zugeordneten Steuergerät (10), einer Spannungsversorgung (V_{Batt}) sowie wenigstens einer über ein erstes Ende (20) mit dem Steuergerät (10) verbundenen Antenne (12) zur Kommunikation mit einer Bedienungseinrichtung über eine insbesondere bidirektionale Funkstrecke,
**dadurch gekennzeichnet,**
**dass** die Antenne (12) mit einer Gleichspannung und/oder einem Gleichstrom beaufschlagbar ist und das Steuergerät (10) Mittel für eine Gleichspannungs- und/oder Gleichstrommessung sowie Mittel zur Auswertung des Messergebnisses umfasst, um anhand dieses Messeergebnisses auf den jeweiligen Anschlusszustand der Antenne (12) zu schließen, wobei während des normalen Betriebs ein zweites Ende der Antenne (12) mit Masse (16) bzw. mit einer Klemme der Spannungsversorgung (V_{Batt}) verbunden und das erste Antennenende (20) wahlweise über einen Pull-up- bzw. Pull-down-Widerstand (22, 30) mit der anderen Klemme der Spannungsversorgung (V_{Batt}) oder mit der Masse entsprechenden einen Klemme der Spannungsversorgung (V_{Batt}) verbindbar ist.

2. Sicherungssystem nach Anspruch 1,
**dadurch gekennzeichnet ,**
**dass** das zweite Ende der Antenne (12) an das mit der betreffenden Klemme der Spannungsversorgung (V_{Batt}) verbundene Chassis eines Kraftfahrzeuges angeschlossen ist.

3. Sicherungssystem nach Anspruch 1 oder 2,
**dadurch gekennzeichnet,**
**dass** der Anschluss (24), über den die Antenne an das Steuergerät (10) angeschlossen ist, eine gegenüber dem Antenneneingang hohe Impedanz aufweist.

4. Sicherungssystem nach Anspruch 3,
**dadurch gekennzeichnet ,**
**dass** zur Erzielung der geringen Impedanz des Antenneneingangs ein Anpassungsschaltkreis vorgesehen ist.

5. Sicherungssystem nach einem der vorhergehenden Ansprüche,
**dadurch gekennzeichnet ,**
**dass** mittels des Steuergeräts (10) insbesondere der Gleichspannungspegel an dem Antenneneingang (20) überwacht wird.

6. Sicherungssystem nach einem der vorhergehenden Ansprüche,
**dadurch gekennzeichnet,**
**dass** der Antenneneingang (20) zur Überwachung seines Zustandes mit einem gesonderten Anschluss (24) des Steuergeräts verbunden ist.

7. Sicherungssystem nach einem der vorhergehenden Ansprüche,
**dadurch gekennzeichnet,**
**dass** zur Überwachung des Anschlusszustandes der Antenne (12) diese mit einem kontinuierlichen Gleichstromsignal beaufschlagbar ist.

8. Sicherungssystem nach einem der Ansprüche 1 bis 6,
**dadurch gekennzeichnet,**
**dass** zur Überwachung des Anschlusszustandes der Antenne (12) diese mit einem geschalteten Gleichstromsignal beaufschlagbar ist.

9. Verfahren zur Überwachung des Anschlusszustandes einer Antenne (12) eines insbesondere für Kraftfahrzeuge bestimmten Sicherungssystems (14) für einen schlüssellosen Zugang, wobei das Sicherungssystem (14) überdies mit einer Spannungsversorgung (V_{Batt}) versehen ist und ein insbesondere einem Kraftfahrzeug zugeordnetes Steuergerät (10) umfasst, mit dem ein ersten Ende (20) der Antenne (12) verbunden ist, und wobei die Antenne (12) der Kommunikation mit einer Bedienungseinrichtung über eine insbesondere bidirektionale Funkstrecke dient,
**dadurch gekennzeichnet ,**
**dass** die Antenne (12) mit einer Gleichspannung und/oder einem Gleichstrom beaufschlagt und mittels des Steuergeräts (10) eine Gleichspannungs- und/oder Gleichstrommessung durchgeführt wird, um anhand des Messeergebnisses auf den jeweiligen Anschlusszustand der Antenne (12) zu schließen, wobei für den normalen Betrieb ein zweites Ende der Antenne (12) mit Masse (16) bzw. mit einer Klemme der Spannungsversorgung (V_{Batt}) verbunden wird und wobei das erste Antennenende (20) zur Überprüfung eines korrekten Anschlusses der Antenne (12) über einen Pull-up-Widerstand (22) mit der anderen Klemme der Spannungsversorgung (V_{Batt}) und zur Erkennung eines Kurzschlusses über einen Pull-down-Widerstand (30) mit der Masse entsprechenden einen Klemme der Spannungsversorgung (V_{Batt}) verbunden wird.

10. Verfahren nach Anspruch 9,
**dadurch gekennzeichnet,**
**dass** das zweite Ende der Antenne (12) an das mit der betreffenden Klemme der Spannungsversorgung (V_{Batt}) verbundene Chassis eines Kraftfahrzeuges angeschlossen wird.

11. Verfahren nach einem der vorhergehenden Ansprüche,
**dadurch gekennzeichnet ,**
**dass** als Steuergerätanschluss (24), an den die Antenne (12) angeschlossen wird, ein Anschluss mit einer gegenüber dem Antenneneingang hohen Impedanz verwendet wird.

12. Verfahren nach Anspruch 11,
**dadurch gekennzeichnet,**
**dass** zur Erzielung der geringen Impedanz des Antenneneingangs ein Anpassungsschaltkreis verwendet wird.

13. Verfahren nach Anspruch 12,
**dadurch gekennzeichnet ,**
**dass** mittels des Steuergeräts (10) insbesondere der Gleichspannungspegel an dem Antenneneingang (20) überwacht wird.

14. Verfahren nach einem der vorhergehenden Ansprüche,
**dadurch gekennzeichnet,**
**dass** der Antenneneingang (20) zur Überwachung seines Zustandes mit einem gesonderten Anschluss (24) des Steuergeräts (10) verbunden wird.

15. Verfahren nach einem der vorhergehenden Ansprüche,
**dadurch gekennzeichnet ,**
**dass** zur Überwachung des Anschlusszustandes der Antenne (12) diese mit einem kontinuierlichen Gleichstromsignal beaufschlagt wird.

16. Verfahren nach einem der Ansprüche 9 bis 14,
**dadurch gekennzeichnet ,**
**dass** zur Überwachung des Anschlusszustandes der Antenne (12) diese mit einem geschalteten Gleichstromsignal beaufschlagt wird.

## Claims

1. A security system (14) for keyless entry, in particular for motor vehicles, comprising a control unit (10) associated in particular with a motor vehicle, a power supply (V_{Batt}) and at least one antenna (12) connected to the control unit (10) via a first end for communication with an operating device via a radio path, in particular a bidirectional radio path,
**characterized in that**
the antenna (12) can have a DC voltage and/or a DC current applied, with said control unit (10) includings means for a DC voltage measurement and/or a DC current measurement as well as means for the evaluation of the measured result in order to draw a conclusion on the respective connection state of the antenna (12) by means of this measured result, with a second end of the antenna (12) being connected to ground (16) or to a terminal of the power supply (V_{Batt}) in normal operation and the first antenna end being able to be selectively connected to the other terminal of the power supply (V_{BATT}) or to the one terminal of the power supply (V_{BATT}) corresponding to ground via a pull-up resistor or a pull-down resistor (22, 30) respectively.

2. A security system in accordance with claim 1, **characterized in that** the second end of the antenna (12) is connected to the chassis of a motor vehicle connected to the terminal in question of the power supply (V_{Batt}).

3. A security system in accordance with claim 1 or claim 2, **characterized in that** the connector (24), via which the antenna is connected to the control unit (10), has a high impedance with respect to the antenna input.

4. A security system in accordance with claim 3, **characterized in that** a matching circuit is provided to achieve the low impedance of the antenna input.

5. A security system in accordance with any one of the preceding claims,, **characterized in that** in particular the DC voltage level at the antenna input (20) is monitored by means of the control unit (10).

6. A security system in accordance with any one of the preceding claims, **characterized in that**, to monitor its state, the antenna input (20) is connected to a separate connector (24) of the control unit.

7. A security system in accordance with any one of the preceding claims, **characterized in that**, for the monitoring of the connection state of the antenna (12), this antenna can have a continuous DC current signal applied.

8. A control system in accordance with any one of claims 1 to 6, **characterized in that**, for the monitoring of the connection state of the antenna (12), this antenna can have a switched DC current signal applied.

9. A method of monitoring the connection state of an antenna (12) of a security system (14), intended in particular for motor vehicles, for a keyless entry, with the security system (14) moreover being provided with a power supply (V_{Batt}) and including a control unit (10) which is in particular associated with a motor vehicle and with which a first end of the antenna (12) is connected, and with the antenna (12) serving for the communication with an operating device via a radio path, in particular a bidirectional radio path,
**characterized in that**
the antenna (12) has a DC voltage and/or a DC current applied and a DC voltage measurement or a DC current measurement is carried out by means of the control unit (10) to draw a conclusion on the respective connection state of the antenna (12) by means of the measured result, with, for normal operation, a second end of the antenna (12) being connected to ground (16) or to a terminal of the power supply (V_{Batt}), and with the first antenna end (20) being connected via a pull-up resistor (22) to the other terminal of the power supply (V_{BATT}) for the check of a correct connection of the antenna (12) and via a pull-down resistor (30) to the one terminal of the power supply (V_{BATT}) corresponding to groundfor the recognition of a short-circuit.

10. A method in accordance with claim 9, **characterized in that** the second end of the antenna (12) is connected to the chassis of a motor vehicle connected to the terminal in question of the power supply (V_{Batt}).

11. A method in accordance with any one of the preceding claims, **characterized in that** a connection with a high impedance with respect to the antenna input is used as the control unit connector (24) to which the antenna (12) is connected.

12. A method in accordance with claim 11, **characterized in that** a matching circuit is used to achieve the low impedance of the antenna input.

13. A method in accordance with claim 12, **characterized in that** in particular the DC voltage level at the antenna input (20) is monitored by means of the control unit (10).

14. A method in accordance with any one of the preceding claims, **characterized in that** the antenna input (20) is connected, for the monitoring of its state, to a separate connector (24) of the control unit (10).

15. A method in accordance with any one of the preceding claims, **characterized in that**, for the monitoring of the connection state of the antenna (12), this antenna has a continuous DC current signal applied.

16. A method in accordance with any one of claims 9 to 14, **characterized in that**, for the monitoring of the connection state of the antenna (12), this antenna has a switched DC current signal applied.

## Revendications

1. Système de sécurité (14) pour un accès sans clé, en particulier pour des véhicules automobiles, avec un appareil de commande (10) associé en particulier à un véhicule automobile, une alimentation en tension (V_{Batt}) ainsi qu'au moins une antenne (12) reliée, par une première extrémité (20), à l'appareil de commande (10), pour établir une communication avec un dispositif d'utilisation, par une liaison radio, en particulier bidirectionnelle,
**caractérisé en ce que**
l'antenne (12) est susceptible d'être sollicitée avec une tension continue et/ou un courant continu et l'appareil de commande (10) comprend des moyens pour la mesure de la tension contenue et/ou du courant continu ainsi que des moyens pour évaluer le résultat de mesure, pour, à l'aide de ce résultat de mesure, conclure à l'état de raccordement respectif de l'antenne (12), sachant que, pendant le fonctionnement normal, une deuxième extrémité de l'antenne (12) est reliée à la masse (16), ou à une borne de l'alimentation en tension (V_{Batt}), et que la première extrémité d'antenne (20) est reliée, au choix, par une résistance Pull-up ou Pull-down (22, 30), à l'autre borne de l'alimentation en tension (V_{Batt}) ou à une borne, correspondant à la masse, de l'alimentation en tension (V_{Batt}).

2. Système de sécurité selon la revendication 1, **caractérisé en ce que** la deuxième extrémité d'antenne (12) est raccordée au châssis, relié à la borne concernée de l'alimentation en tension (V_{Batt}), d'un véhicule automobile.

3. Système de sécurité selon la revendication 1 ou 2, **caractérisé en ce que** le raccordement (24), par l'intermédiaire duquel l'antenne est raccordée à l'appareil de commande (10), présente une impédance élevée par rapport à l'entrée d'antenne.

4. Système de sécurité selon la revendication 3, **caractérisé en ce qu'**un circuit d'adaptation est prévu pour obtenir la faible impédance de l'entrée d'antenne.

5. Système de sécurité selon l'une des revendications précédentes, **caractérisé en ce que**, au moyen de l'appareil de commande (10), en particulier le niveau de tension continu à l'entrée d'antenne (20) est surveillé.

6. Système de sécurité selon l'une des revendications précédentes, **caractérisé en ce que** l'entrée d'antenne (20) est reliée à un raccordement (24) séparé de l'appareil de commande afin de surveiller son état.

7. Système de sécurité selon l'une des revendications précédentes, **caractérisé en ce que** pour surveiller l'état de raccordement de l'antenne (12), celle-ci est susceptible d'être sollicitée avec un système de courant continu lui-même continu.

8. Système de sécurité selon l'une des revendications 1 à 6, **caractérisé en ce que**, pour surveiller l'état de raccordement de l'antenne (12), celle-ci est susceptible d'être sollicitée avec un signal de courant continu commuté.

9. Procédé de surveillance de l'état de raccordement de l'antenne (12) d'un système de sécurité (14), en particulier conçu pour des véhicules automobiles, pour permettre un raccordement sans clé, le système de sécurité (14), en plus de cela, étant muni d'une alimentation en tension (V_{Batt}) et comprend un appareil de commande (10), en particulier associé à un véhicule, appareil de commande auquel une première extrémité (20) de l'antenne (12) est reliée, et l'antenne (12) servant à la communication avec un dispositif d'utilisation, par une liaison radio, en particulier bidirectionnelle,
**caractérisé en ce que**
l'antenne (12) est susceptible d'être sollicitée par une tension continue et/ou par un courant continu, et au moyen de l'appareil de commande (10) est effectuée une mesure de tension continue et/ou de courant continu, pour, à l'aide du résultat de mesure, conclure à l'état de raccordement respectif de l'antenne (12), sachant que, pour le fonctionnement normal, une deuxième extrémité de l'antenne (12) est reliée à la masse (16), ou à une borne de l'alimentation en tension (V_{Batt}), et la première extrémité d'antenne (20), pour vérifier un raccordement correct de l'antenne (12), est reliée, par une résistance Pull-up (22), à l'autre borne de l'alimentation en tension (V_{Batt}), et, pour identifier un court-circuit, par une résistance Pull-down (30), est reliée à une borne, correspondant à la masse, de l'alimentation en tension (V_{Batt}).

10. Procédé selon la revendication 9, **caractérisé en ce que** la deuxième extrémité de l'antenne (12) est raccordée au châssis, relié à la borne concernée de l'alimentation en tension (V_{Batt}), d'un véhicule automobile.

11. Procédé selon l'une des revendications précédentes, **caractérisé en ce que**, à titre de raccordement d'appareil de commande (24) auquel est raccordée l'antenne (12), est utilisé un raccordement ayant une impédance élevée par rapport à l'entrée d'antenne.

12. Procédé selon la revendication 11, **caractérisé en ce qu'**un circuit d'adaptation est utilisé pour obtenir la faible impédance de l'entrée d'antenne.

13. Procédé selon la revendication 12, **caractérisé en ce que**, au moyen de l'appareil de commande (10), en particulier, on surveille le niveau de tension continu à l'entrée d'antenne (20).

14. Procédé selon l'une des revendications précédentes, **caractérisé en ce que** l'entrée d'antenne (20), pour surveiller son état, est reliée à un raccordement (24) séparé de l'appareil de commande (10).

15. Procédé selon l'une des revendications précédentes, **caractérisé en ce que**, pour surveiller l'état de raccordement de l'antenne (12), celle-ci est sollicitée avec un signal de courant continu permanent.

16. Procédé selon l'une des revendications 9 à 14, **caractérisé en ce que**, pour surveiller l'état de raccordement de l'antenne (12), celle-ci est sollicitée avec un signal de courant continu commuté.
